(19) Europäisches Patentamt
European Patent Office
Office européen des brevets

(11) **EP 3 820 644 B1**

(12) **FASCICULE DE BREVET EUROPEEN**

(45) Date de publication et mention de la délivrance du brevet:
**07.09.2022  Bulletin 2022/36**

(21) Numéro de dépôt: **19756226.7**

(22) Date de dépôt: **12.07.2019**

(51) Classification Internationale des Brevets (IPC):
**B23K 26/00** *(2014.01)*     **B23K 26/0622** *(2014.01)*
**B23K 26/352** *(2014.01)*

(52) Classification Coopérative des Brevets (CPC):
**B23K 26/0006; B23K 26/0624; B23K 26/355;
B23K 26/3568**

(86) Numéro de dépôt international:
**PCT/FR2019/051757**

(87) Numéro de publication internationale:
**WO 2020/012137 (16.01.2020 Gazette 2020/03)**

(54) **PROCEDE DE NANOSTRUCTURATION DE LA SURFACE D'UN MATERIAU PAR LASER**

VERFAHREN ZUR NANOSTRUKTURIERUNG DER OBERFLÄCHE EINES MATERIALS MITTELS LASER

PROCESS OF NANOSTRUCTURING THE SURFACE OF A MATERIAL BY LASER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **13.07.2018   FR 1856499**

(43) Date de publication de la demande:
**19.05.2021   Bulletin 2021/20**

(73) Titulaires:
• **Université Jean Monnet Saint Etienne
42100 Saint Etienne (FR)**
• **Centre National de la Recherche Scientifique
(CNRS)
75016 Paris (FR)**

(72) Inventeurs:
• **PIGEON, Florent
42000 SAINT ETIENNE (FR)**
• **ABOU SALEH, Anthony
42000 SAINT ETIENNE (FR)**
• **COLOMBIER-CINQUANTIN, Jean-Philippe
42570 SAINT-HEAND (FR)**
• **GARRELIE, Florence
42000 SAINT ETIENNE (FR)**

(74) Mandataire: **Regimbeau
20, rue de Chazelles
75847 Paris Cedex 17 (FR)**

(56) Documents cités:
**WO-A1-2007/012215      DE-A1-102005 043 495
US-A1- 2012 322 236      US-A1- 2016 064 892**

**Description**

CONTEXTE ET ARRIERE-PLAN TECHNOLOGIQUE

La présente invention se rapporte à un procédé de nanostructuration de la surface d'un matériau par laser. Plus précisément, le procédé vise à former un motif régulier de nanostructures sur ladite surface au moyen d'un faisceau laser femtoseconde.

La présence de nanostructures sur une surface peut trouver de nombreuses applications. En effet, cette présence de nanostructures modifie de nombreuses propriétés de la surface qui les porte. Par exemple, le mouillage peut s'en trouver modifié, ce qui peut trouver intérêt dans des applications biomédicales. En particulier, on peut alors créer des surfaces très hydrophobes, ou bien encore des surfaces hydrophiles, qui peuvent alors être utilisées dans des micro-canaux pour séparer des fluides. Il est également possible de créer des surfaces avec des propriétés de friction améliorées, par exemple pour des patins de glisse tels que des skis, ou bien encore pour limiter des usures entre des pièces en contact. L'interaction de la lumière avec la surface peut être modifiée, ce qui peut changer la couleur du matériau telle que perçue par un observateur, ou bien modifier les capacités d'absorption de la lumière, ce qui peut trouver application dans le domaine des énergies renouvelables, et en particulier de l'énergie photovoltaïque. De fait, une surface nanostructurée peut être très sélective en longueur d'onde, ce qui permet par exemple de n'absorber que certaines longueurs d'onde. D'autres applications peuvent bénéficier d'une surface nanostructurée, comme par exemple dans le domaine de la plasmonique, des cristaux photoniques ou de l'optique en champ proche.

La nanostructuration d'une surface peut être réalisée par différentes méthodes, par exemple par photolithographie, rayons X, faisceau électronique, faisceau d'ions, faisceau de particules, ou bien encore des méthodes mécaniques. Ces dernières années ont vu l'émergence de l'utilisation d'un faisceau laser femtoseconde pour réaliser des nanostructures à la surface d'un matériau, ce qu'on appelle la nanostructuration d'une surface. En effet, l'utilisation d'un laser femtoseconde présente plusieurs avantages. En particulier, l'équipement est simplifié puisqu'il n'est pas nécessaire de travailler dans le vide ou en salle blanche. Par ailleurs, l'utilisation d'un laser ne nécessite pas de contact, et il est possible de travailler des surfaces présentant différentes formes. La demande de brevet US 2012/0322236 A1 présente par exemple un procédé de gravure de substrat utilisant des trains d'impulsions.

La gravure par ablation de matière par simple focalisation du laser femtoseconde ne permet d'obtenir que des structures de surface inscrites par laser dont la taille caractéristique est supérieure ou égale au diamètre du faisceau laser. Cette technique ne permet donc pas d'obtenir des nanostructures de très petite taille. En outre, le procédé de fabrication est long, puisque chaque cavité dans la surface doit être crée individuellement. Une autre approche permet d'obtenir des nanostructures de très petite taille, c'est-à-dire avec une taille caractéristique très inférieure au diamètre du faisceau laser, en tirant parti de l'auto-organisation de nanostructures sous l'effet d'un faisceau laser femtoseconde. Il s'agit d'irradier la surface avec le faisceau laser femtoseconde avec une énergie moindre que pour obtenir des structures de surface inscrites par laser. On obtient alors des structures de surfaces irradiées par laser (plus connues sous le terme anglais de "laser-irradiated surface structures").

Cette approche permet notamment d'obtenir des structures de surface périodiques induites par laser, plus connues par l'acronyme LIPSS pour l'anglais "laser-induced periodic surface structures". Les LIPSS obtenues jusqu'à présent prennent la forme de rides ou ondulations ("ripples" en anglais), constituées par une alternance de crêtes et de creux, avec une périodicité spatiale typiquement comprise entre 200 nm et 1000 nm en fonction des matériaux, de la longueur d'onde du laser femtoseconde, de la polarisation de l'onde optique, et éventuellement du nombre d'impulsions et de l'incidence du faisceau laser. Par exemple, les demandes de brevet WO 2007/012215 A1 (base pour le préambule de la revendication 1) et DE 10 2005 043 495 A1 décrivent des procédés permettant d'obtenir des LIPSS, en utilisant une impulsion laser polarisée. Toutefois, cette approche ne permet pas d'obtenir des structures présentant une périodicité spatiale faible, inférieure à 100 nm.

PRESENTATION DE L'INVENTION

L'invention a pour but de permettre d'obtenir un motif régulier de nanostructures périodiques présentant une périodicité spatiale inférieure à 130 nm, et de permettre d'obtenir des structures de surface périodiques induites par laser présentant plusieurs axes de symétrie dans le plan de la surface irradiée, cette dernière pouvant être de grande dimension.

A cet effet, il est proposé un procédé de nanostructuration de la surface d'un matériau solide pour former un motif régulier de nanostructures sur ladite surface, ledit procédé comprenant les étapes de :

- fourniture du matériau solide, ledit matériau comportant une surface ;
- irradiation d'une partie de la surface par un faisceau laser femtoseconde, comprenant une pluralité de trains d'impulsions, dans lequel :

  • chaque train d'impulsions comprend au moins deux impulsions,
  • chaque impulsion présente une fluence crête, et une somme des fluences crêtes des impulsions d'un train d'impulsions est comprise entre 10% et 70 % d'une fluence seuil correspondant à un seuil d'ablation de matière pour une impulsion pour ledit matériau,

- deux impulsions consécutives d'un train d'impulsions sont temporellement séparées par une durée $\Delta T$ crête-à-crête comprise entre 500 fs et 150 ps,
    - deux trains d'impulsions consécutifs sont temporellement séparés par une durée supérieure à 10 $\Delta T$,

- obtention d'un motif régulier de nanostructures sur ladite partie de surface, présentant une périodicité spatiale inférieure à 130 nm,
- déplacement du faisceau laser femtoseconde sur la surface de sorte à irradier d'autres parties de ladite surface.

Le procédé est avantageusement complété par les caractéristiques suivantes, prises seules ou en quelconque de leurs combinaisons techniquement possibles :

- chaque impulsion présente une fluence crête comprise entre 5% et 65% d'une fluence seuil correspondant à un seuil d'ablation de matière pour une impulsion pour ledit matériau ;
- l'irradiation par la pluralité de trains d'impulsions sur un même élément de surface représente une dose totale inférieure à 6 J/cm$^2$ ;
- chaque partie de la surface est irradiée par au moins 5 trains d'impulsions ;
- chaque partie de la surface est irradiée par un nombre de trains d'impulsions inférieur à 500 ;
- chaque impulsion d'un train d'impulsions présente une durée inférieure à la durée entre deux impulsions consécutives du train d'impulsions ;
- le matériau présente une structure cristalline ;
- le matériau présente une structure cristalline cubique face centrée ;
- le matériau est majoritairement constitué de métal ;
- le matériau est majoritairement constitué de carbone ;
- le matériau contient du carbone sous forme de diamant amorphe, et est de préférence majoritairement constitué de carbone sous forme de diamant amorphe ;
- des impulsions d'un train d'impulsions présentent des polarisations linéaires différentes lorsque lesdites impulsions arrivent sur la surface ;
- des impulsions d'un train d'impulsions présentent des polarisations linéaires croisées ;
- les nanostructures obtenues sont des nanopuits ou des nanotrous ou des nano-bosses, formant un réseau régulier sur la surface ;
- les nanopuits présentent un diamètre compris entre 10 nm et 40 nm, et de préférence entre 20 nm et 30 nm ;
- les nano-bosses présentent une hauteur inférieure à 60 nm ;
- les parties irradiées de la surface se recouvrent partiellement ;
- le matériau présente une épaisseur sous sa surface inférieure à 200 nm.

## PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

- la figure 1 illustre schématiquement une configuration de conditionnement d'un faisceau laser femtoseconde pouvant être utilisée pour mettre en oeuvre un mode de réalisation possible de l'invention,
- la figure 2A illustre schématiquement deux impulsions consécutives d'un train d'impulsions selon un mode de réalisation possible de l'invention,
- la figure 2B illustre schématiquement deux trains d'impulsions consécutifs dans le faisceau laser selon un mode de réalisation possible de l'invention,
- les figures 3A, 3B, et 3C, sont des images illustrant l'évolution de la structuration d'une même surface irradiée par laser en fonction du nombre de trains d'impulsions,
- les figures 4A, 4B, et 4C, sont des images illustrant l'évolution de la structuration d'une même surface irradiée par laser en fonction de la fluence des impulsions,
- les figures 5A, 5B, et 5C, sont des images illustrant l'évolution de la structuration d'une même surface irradiée par laser en fonction du temps entre deux impulsions d'un train d'impulsions,
- les figures 6A, 6B, et 6C, sont des images illustrant l'évolution de la structuration d'une même surface irradiée par laser en fonction de l'orientation de la polarisation de chacune des impulsions d'un train d'impulsions
- les figures 7A et 7B sont des images montrant le motif régulier de nano-bosses sur une surface de carbone sous forme de diamant amorphe irradiée par le procédé selon un mode de réalisation possible de l'invention ;
- la figure 7C est une courbe montrant une autocorrélation moyenne radiale sur une image obtenue par microscope à force atomique d'une surface similaire à celle des figures 7A et 7B.

## DESCRIPTION DETAILLEE

L'invention permet d'obtenir un motif régulier de nanostructures présentant une périodicité spatiale inférieure à 130 nm, de préférence (strictement) inférieure à 100 nm, voire inférieure à 60 nm. On entend par motif régulier (« regular pattern » en anglais) de nanostructures le résultat de l'organisation des nanostructures recouvrant régulièrement et continûment une partie de la surface. Plus encore, l'invention peut permettre d'obtenir un maillage de nanostructures présentant une périodicité spatiale inférieure à 130 nm, de préférence (strictement) inférieure à 100 nm, voire inférieure à 60 nm. On entend par maillage (« mesh » en anglais) de nanostructures un réseau régulier de nanostructures recouvrant régulièrement et continûment une partie de la surface. De préférence, le motif régulier présente plusieurs axes de symétrie dans le plan de la surface irradiée.

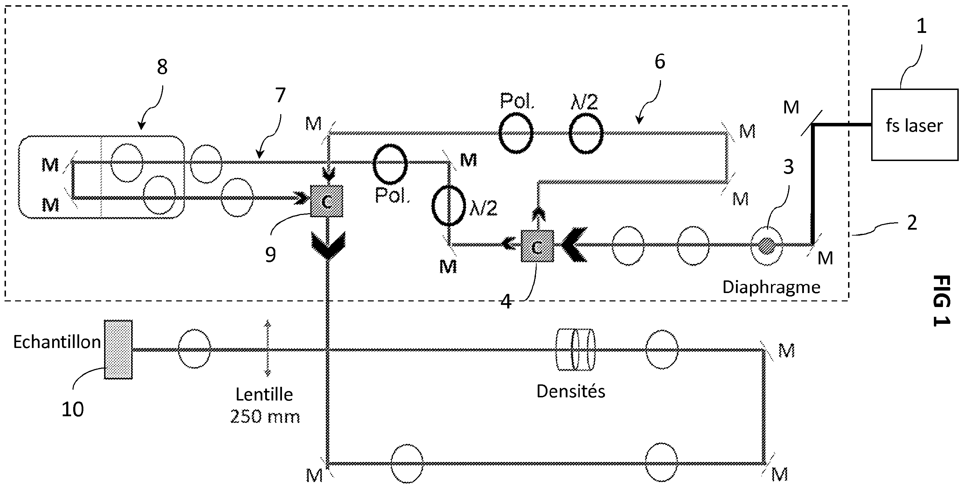

La figure 1 illustre un exemple d'une configuration de conditionnement d'un faisceau laser femtoseconde pouvant être utilisée pour mettre en oeuvre le procédé de nanostructuration de l'invention. On entend par laser femtoseconde un laser émettant de la lumière par des impulsions de très courtes durées comprises entre 1 femtoseconde ($10^{-15}$ s) et $5 \times 10^{-13}$ s. Le conditionnement du faisceau laser vise notamment à générer un train d'impulsions comportant des impulsions laser très proches à partir d'une impulsion laser unique, généralement deux impulsions laser formant un doublet d'impulsions.

Le faisceau laser initial est émis par une source laser femtoseconde 1, puis passe dans un sous-système 2 permettant de générer plusieurs impulsions consécutives constituant un train d'impulsions, et de fixer le temps séparant deux impulsions consécutives. Dans la configuration illustrée, le sous-système 2 est une configuration dite Mach-Zehnder. Le sous-système 2 présenté permet de générer deux impulsions à partir d'une impulsion initiale unique. D'autres configurations peuvent cependant permettre de générer plus d'impulsions à partir d'une même impulsion initiale unique.

Le faisceau initial est séparé en deux lors d'un cheminement faisant intervenir plusieurs miroirs M. Dans l'exemple, le faisceau passe d'abord dans un diaphragme 3 (qui pourrait être en amont du sous-système 2). L'iris du diaphragme 3 est par exemple de 6 mm. Le faisceau initial est ensuite séparé en deux faisceaux secondaires d'intensité égale par un premier séparateur 4 (ou "beam splitter" en anglais), non polarisant. On obtient un premier faisceau secondaire 6 et un second faisceau secondaire 7.

Les chemins optiques des faisceaux secondaires 6, 7 sont différents, et l'un est plus long que l'autre d'une longueur correspondant à l'espacement temporel souhaité entre les deux impulsions lasers. A cet effet, le second faisceau secondaire 7 traverse un dispositif de retardement 8 rallongeant son chemin optique d'une distance $\Delta z$, de sorte que lors de la recombinaison des faisceaux secondaires 6, 7 dans le second séparateur 9, l'impulsion du second faisceau secondaire 7 soit retardée par rapport à l'impulsion du premier faisceau secondaire 6 d'une durée $\Delta t$ :

$$\Delta t = \frac{2\Delta z}{c}$$

avec c la vitesse de la lumière.

Le faisceau laser initial, les faisceaux lasers secondaires 6, 7 et le faisceau laser issu du second séparateur 9 traversent différents organes optiques, notamment de mise en forme, comme par exemple des lentilles, non représentés pour des raisons de simplicité. Toutefois, il convient de noter la possibilité de disposer sur les chemins optiques des faisceaux secondaires 6, 7 des lames à retard 5a et des polariseurs 5b, afin de modifier les polarisations des faisceaux lumineux. En particulier, les polariseurs 5b des chemins optiques des faisceaux secondaires 6, 7 sont de préférence différents afin que les faisceaux lasers secondaires 6, 7 présentent des polarisations différentes, ce qui se traduit par des impulsions avec des polarisations différentes dans le faisceau laser. De préférence, les polariseurs 5b des chemins optiques des faisceaux secondaires 6, 7 sont des polariseurs linéaires croisés. De préférence, les lames à retard 5a sont des lames demi-onde introduisant un retard de $\lambda/2$, où $\lambda$ est la longueur d'onde du faisceau laser. Bien entendu, il est possible de modifier les dispositions et caractéristiques des différents organes optiques en fonction des caractéristiques que l'on cherche à obtenir dans le faisceau laser qui irradie la surface du matériau.

Le faisceau laser chemine ensuite vers l'échantillon 10 du matériau dont il irradie la surface. Du fait des différences entre les chemins optiques des faisceaux secondaires 6, 7, le faisceau laser présente deux impulsions, de préférence polarisées différemment.

Le matériau est un matériau solide. Il a été constaté qu'il est possible de nanostructurer de manière similaire la surface de matériaux très différents. Le matériau peut être tout type de matériau solide susceptible de produire à sa surface un motif régulier de nanostructures présentant une périodicité spatiale inférieure à 130 nm (ou 100 nm) lorsque cette surface est irradiée conformément au procédé.

Ainsi, le matériau peut être amorphe, et peut être majoritairement constitué de carbone. De préférence, le matériau contient alors du carbone sous forme de diamant amorphe, et est de préférence majoritairement constitué de carbone sous forme de diamant amorphe, et de préférence encore est du carbone sous forme de diamant amorphe.

A l'inverse, il est possible que le matériau solide présente une structure cristalline, c'est-à-dire qu'il n'est pas amorphe. Typiquement, le matériau est polycristallin, mais il peut également être monocristallin. Le matériau peut également être un alliage faisant intervenir de tels matériaux. De préférence, le matériau est alors majoritairement constitué de métal. De préférence également, le matériau présente une structure cristalline cubique face centrée. A titre d'illustration, les exemples décrits ci-après mettent en oeuvre du nickel (100). De préférence, le matériau est du nickel, du cuivre, de l'or, du fer, de l'argent, du platine, de l'indium, du palladium, du titane, ou un alliage comprenant ceux-ci.

Le matériau solide présente une surface à irradier par laser. Le procédé ne requiert pas de préparation particulière de la surface. Il n'est pas nécessaire de préstructurer celle-ci ou de la recouvrir d'un revêtement particulier. Il n'est pas non plus nécessaire de placer le matériau à irradier dans des conditions particulières, en termes de pression ou de température. Ainsi, le procédé se caractérise par ses faibles contraintes de mise en oeuvre pour obtenir l'effet recherché, à savoir l'obtention d'un motif régulier de nanostructures présentant une périodicité spatiale inférieure à 130 nm. Il suffit simplement que la surface soit propre et suffisamment plane sur un espace correspondant au diamètre de la section du faisceau laser transversale à la direction de propagation du laser (typiquement de quelques micromètres à plusieurs centaines de micromètres).

Lors du procédé, cette surface du matériau est irradiée par le faisceau laser. Il est à noter que la surface à irradier du matériau est généralement très grande par rapport au diamètre de la section du faisceau laser transversale à la direction de propagation du laser, de sorte que l'irradiation de la surface se fait partie par partie, chaque partie correspondant approximativement au diamètre du faisceau laser. Toutefois, le procédé se caractérise notamment par le fait qu'il est possible que les parties irradiées de la surface se recouvrent partiellement sans que la continuité ou la périodicité des nanostructures obtenues ne soit interrompue. Ainsi, les différentes parties de la surface peuvent être irradiées successivement sans qu'apparaissent de zone frontière entre elles. Il est également possible de balayer continûment la surface irradiée dès lors que chaque partie à irradier de la surface est irradiée selon le procédé. On peut ainsi traiter une grande surface, sans limitation autre que les contraintes du déplacement de l'échantillon 10 et/ou du laser, beaucoup d'échantillons 10 présentant une superficie de surface à irradier bien supérieure à la taille du faisceau laser.

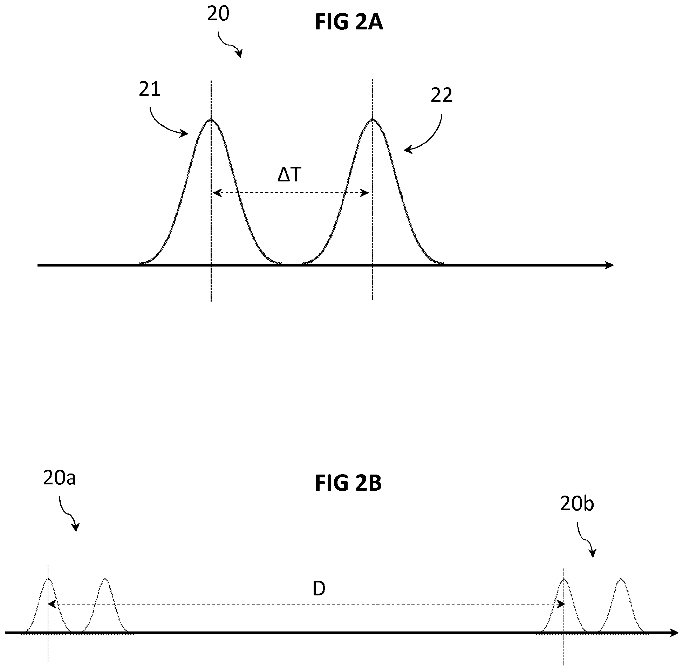

La longueur d'onde du laser peut typiquement être comprise entre 400 nm et 1030 nm, comme par exemple 800 nm dans les exemples ci-après. Le faisceau laser irradiant une partie de la surface comprend une pluralité de trains d'impulsions, chaque train d'impulsions comprenant au moins deux impulsions. De préférence, chaque train d'impulsions comprend deux ou trois impulsions. La figure 2A montre un exemple schématique d'un train d'impulsions 20 comprenant deux impulsions 21, 22. Ainsi qu'illustré, les deux impulsions 21, 22 présentent de préférence les mêmes caractéristiques en termes de profil de fluence. De fait, les deux impulsions sont typiquement issues d'une même impulsion initiale, grâce à un conditionnement comme décrit en référence à la figure 1. En particulier, les deux impulsions 21, 22 présentent de préférence la même fluence crête. Il est cependant possible que les deux impulsions présentent des profils de fluence différentes, et notamment des fluences crêtes différentes. Il faudrait pour cela modifier un des chemins optiques 6, 7, par exemple en y plaçant un atténuateur ou en redivisant un des chemins optiques 6, 7, qui compliquerait l'installation, ou modifier la séparation des faisceaux, par exemple avec un premier séparateur 4 avec une répartition de l'intensité lumineuse inégale entre les chemins optiques 6,7.

Chaque impulsion 21, 22 présente une fluence crête inférieure à une fluence seuil correspondant à un seuil d'ablation de matière pour une impulsion pour le matériau à irradier. Il s'agit plus précisément de fluence énergétique correspondant à l'énergie reçue par unité de surface. La fluence crête Fs peut se calculer par la formule suivante :

$$Fs = \frac{2 \times E}{\pi \times w^2}$$

avec E l'énergie de l'impulsion, et 2w la largeur du faisceau (ou "waist" en anglais) de l'impulsion avec une approximation gaussienne (par exemple d'environ 50 μm). La fluence est principalement contrôlée au moyen de la source laser femtoseconde 1.

La fluence seuil correspond à la fluence énergétique permettant à une impulsion laser isolée d'entraîner une ablation de matière sur la surface irradiée. Ce seuil d'ablation varie en fonction des matériaux. Afin de déterminer le seuil d'ablation adéquat, il est possible d'utiliser la méthode proposée dans l'article de J.M. Liu, "Simple technique for measurements of pulsed Gaussian-beam spot sizes", OPTICS LETTERS, col. 7, no. 5, mai 1982, p.196-198. Dans cette méthode, une surface est irradiée avec des impulsions laser présentant différentes valeurs de fluence. Pour des fluences suffisamment élevées, des cratères se forment à la surface en raison de l'ablation de matériau causée par les impacts laser. Ces cratères présentent des diamètres croissant avec la fluence qui les a formés. En extrapolant le tracé du carré des diamètres en fonction de la fluence, on retrouve le seuil d'ablation. L'article de Hashida et al. "Ablation thresholds of metals with femtosecond laser pulses", 2001, proc. SPIE vol. 4423, p.179-185 discute également de la détermination du seuil d'ablation entre autre par cette recherche du diamètre minimal du cratère.

Par exemple, la fluence du seuil d'ablation à une impulsion d'une durée de 50 fs à une longueur d'onde de 800 nm pour le nickel (100) est d'environ 0,4 J/cm$^2$, avec une énergie de 4 μJ et une demi-largeur du faisceau w de 25 μm (puissance crête de 3,9 mW).

Il est à noter que la fluence du seuil d'ablation à une impulsion dépend de plusieurs paramètres, et que cette fluence du seuil d'ablation doit donc être déterminée en fonction des autres paramètres utilisés dans le cadre de l'irradiation de la surface. Par exemple, la fluence du seuil d'ablation pour les métaux dépend de la durée de l'impulsion, comme mentionné dans l'article de Okamuro et al. "Laser fluence dependence of periodic grating structures formed on metal surfaces under femtosecond laser pulse irradiation", Physical Review B 82, 165417 (2010).

La somme des fluences crêtes des impulsions d'un train d'impulsions doit être suffisamment inférieure à une fluence seuil correspondant à un seuil d'ablation de matière pour une impulsion pour ledit matériau pour permettre la formation d'un motif régulier de nanostructures présentant une périodicité spatiale inférieure à 130 nm, de préférence (strictement) inférieure à 100 nm. Ainsi la somme des fluences crêtes des impulsions d'un train d'impulsions est inférieure à 70 % de la fluence seuil correspondant à un seuil d'ablation de matière pour une impulsion pour ledit matériau. Il faut cependant que l'irradiation soit suffisante pour causer l'apparition des nanostructures. De préférence, la somme des fluences crêtes des impulsions d'un train d'impulsions est supérieure à 10 % de la fluence seuil correspondant à un seuil d'ablation de matière pour une impulsion pour ledit matériau, et de préférence supérieure à 20 %, et de préférence encore de 30 %.

Qui plus est, afin de permettre la formation d'un motif régulier de nano-puits ou de nano-bosses formant un réseau régulier présentant une périodicité spatiale inférieure à 100 nm, il est préférable que cette somme des fluences crêtes des impulsions d'un train d'impulsions soit suffisamment élevée. Ainsi, la somme des fluences crêtes des impulsions d'un train d'impulsions est de préférence supérieure à 48% de la fluence seuil correspondant à un seuil d'ablation de matière pour une impulsion pour ledit matériau.

Par ailleurs, il est préférable que chaque impulsion du train d'impulsions présente une fluence crête suffisante pour que l'apport d'énergie à la surface soit effectivement réalisé par plusieurs impulsions. Ainsi, chaque impulsion présente de préférence une fluence crête supérieure à 5 % d'une fluence seuil correspondant à un seuil d'ablation de matière pour une impulsion pour ledit matériau, et de préférence encore supérieure à 10 %, et de préférence encore supérieure à 20 %. De ce fait, chaque impulsion présente une fluence crête inférieure à 65 % d'une fluence seuil correspondant à un seuil d'ablation de matière pour une impulsion pour ledit matériau, et de préférence encore inférieure à 60 %, et de préférence encore inférieure à 50%.

Dans un cas typique, les fluences crêtes des impulsions 21, 22 d'un train d'impulsions 20 sont sensiblement égales, et donc chaque impulsion 21, 22 présente peut présenter une fluence crête comprise entre 15 % et 35 % d'une fluence seuil correspondant à un seuil d'ablation de matière pour une impulsion pour ledit matériau.

De préférence, la somme des fluences crêtes des impulsions 21, 22 d'un train d'impulsions 20 est inférieure au seuil d'ablation. De préférence, chaque impulsion 21, 22 présente une fluence crête comprise entre 5% et 60% d'une fluence seuil correspondant à un seuil d'ablation de matière pour une impulsion pour le matériau à irradier.

Deux impulsions 21, 22 consécutives d'un train d'impulsions 20 sont temporellement séparées par une durée $\Delta T$ crête-à-crête comprise entre 500 fs et 150 ps (de préférence strictement), de préférence comprise entre 2 ps et 80 ps (de préférence strictement), et de préférence encore comprise entre 5 et 70 ps (de préférence strictement), de préférence encore entre 10 et 50 (de préférence strictement), et encore préférentiellement compris entre 15 et 30 ps (de préférence strictement).

La durée $\Delta T$ crête-à-crête entre deux impulsions 21, 22 consécutives d'un train d'impulsions 20 peut être choisie en fonction des autres paramètres, et notamment en fonction du type de motif régulier de nanostructure qu'il est souhaité d'obtenir. Par exemple, lorsqu'un motif régulier de nano-puits est recherché pour un matériau à structure cristalline cubique face centrée tel que le nickel, la durée $\Delta T$ est de préférence comprise entre 5 ps et 70 ps, de préférence encore entre 15 ps et 30 ps, alors que pour la recherche d'un motif de nanobosses pour le même matériau, la durée $\Delta T$ est de préférence comprise entre 1 ps et 25 ps, de préférence encore entre 3 ps et 15 ps.

Lorsqu'un conditionnement comme celui de la figure 1 est utilisé, cette durée $\Delta t$ entre les deux impulsions 21, 22 correspond à la durée $\Delta t$ dont est retardée l'impulsion du second faisceau secondaire 7 par rapport à l'impulsion du premier faisceau secondaire 6. Chaque impulsion 21, 22 d'un train d'impulsions 20 présente une durée inférieure à la durée $\Delta T$ entre deux impulsions consécutives du train d'impulsions. Par exemple, chaque impulsion 21, 22 d'un train d'impulsions 20 présente une durée inférieure à 400 fs, et de préférence inférieure à 300 fs.

Le faisceau laser comprend une pluralité de trains d'impulsions successifs comme illustré sur la figure 2B où deux trains d'impulsions 20a et 20b se suivent, chacun composés de deux impulsions 21, 22. Typiquement, les trains d'impulsions 20a, 20b successifs sont identiques et présentent des impulsions 21, 22 identiques. Deux trains d'impulsions 20a, 20b consécutifs sont temporellement séparés par une durée D supérieure à 10 $\Delta T$, mesurée de crête-à-crête pour les impulsions correspondantes respectives de chaque train d'impulsions, voire supérieure à 100 $\Delta T$, ou même 1000 $\Delta T$, et plus souvent supérieure à $10^5 \Delta T$. Ainsi, la durée D entre deux trains d'impulsions consécutifs 20a, 20b est très grande devant la durée $\Delta T$ entre deux impulsions 21, 22 consécutives d'un train d'impulsions 20. Dans l'exemple de la figure 2B, cette durée D correspond au temps entre la crête de la première impulsion du premier train d'impulsions 20a et la crête de la première impulsion du deuxième train d'impulsions 20b. La durée D entre deux trains d'impulsions 20a, 20b consécutifs correspond à la fréquence à laquelle la source laser femtoseconde 1 émet les impulsions initiales. Par exemple, lorsque la source laser femtoseconde 1 émet avec une cadence de répétition ("répétition rate" en anglais) de 1 kHz, la durée D est de 1 ms, soit $10^7$ fois une durée $\Delta T$ de 100 ps.

De préférence, chaque partie de la surface à irradier est irradiée par au moins 5 trains d'impulsions, et de préférence par au moins 10 trains d'impulsions. De préférence, chaque partie de la surface est irradiée par un nombre de trains d'impulsions inférieur à 500 (de préférence strictement), de préférence inférieur à 100 (de préférence strictement), et de préférence encore inférieur à 50 (de préférence strictement).

Comme d'autres paramètres, le nombre de trains d'impulsions adéquat dépend de plusieurs facteurs, comme le matériau, la fluence crête des impulsions ou la durée $\Delta T$ entre deux impulsions consécutives d'un train d'impulsions. De fait, plusieurs paramètres sont liés entre eux, mais il est aisé de déterminer les paramètres appropriés en fonction de la configuration utilisée. Les exemples ci-dessous montrent les principaux paramètres en jeu influençant la nanostructuration de la surface dans le cas du nickel et d'un laser à 800 nm. L'homme du métier peut de même déterminer aisément les valeurs des paramètres à utiliser pour une autre configuration par quelques essais, en faisant varier les valeurs des paramètres autour de celles indiquées et en cherchant à obtenir un motif régulier de nanostructures présentant une périodicité spatiale inférieure à 130 nm, et de préférence (strictement) inférieure à 100 nm.

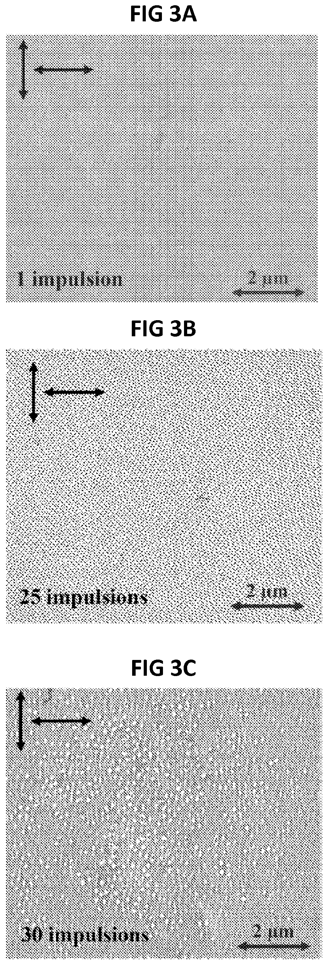

Les figures 3A, 3B, 3C, 4A, 4B, 4C, 5A, 5B, 5C, 6A, 6B, 6C sont des images acquises par microscope électronique à balayage montrant l'évolution de la structuration d'une surface irradiée par laser en faisant varier les paramètres de cette irradiation. Sauf indication contraire, les paramètres suivants ont été utilisés :

- matériau de la surface : nickel (100),
- longueur d'onde : 800 nm,
- seuil d'ablation à une impulsion : 0,4 J/cm$^2$,
- train d'impulsions composé de deux impulsions consécutives (doublet d'impulsions),
- durée $\Delta T$ entre deux impulsions consécutives d'un train d'impulsions : 22 ps
- taux de répétition (entre deux trains) : 1 kHz,
- somme des fluences crête des impulsions d'un train d'impulsions : 0,24 J/cm$^2$
- durée de chaque impulsion : 50 fs
- nombre de trains d'impulsions : 25
- polarisations linéaires croisées entre les deux impulsions consécutives.

Les figures 3A à 3C montrent l'influence du nombre de trains d'impulsions sur la structuration d'une surface irradiée par laser. Les autres paramètres sont ceux mentionnés plus haut. La figure 3A montre la surface après un seul train d'impulsions. La structure de la surface n'est pas altérée, ce qui signifie que le nombre de trains d'impulsions n'a pas été suffisant pour cette configuration. La figure 3B montre la surface après 25 trains d'impulsions. On constate que des nanostructures forment un motif régulier composé de nanopuits répartis régulièrement en réseau à la surface (un maillage de nanopuits), avec une périodicité inférieure à 100 nm. La figure 3C montre une surface après l'irradiation par 30 trains d'impulsions laser. Si le motif régulier des nanostructures semble toujours présent en arrière-plan, on constate l'apparition de structures supplémentaires de dimension bien plus importante et perturbant le motif régulier, espacées de distances bien plus importantes que ne le sont deux nanopuits adjacents.

On constate donc que s'il faut un certain nombre de trains d'impulsions pour créer le motif régulier, il est préférable de limiter le nombre de trains d'impulsions afin de ne pas détruire le motif régulier de nanostructures obtenu. Ainsi pour le nickel et les matériaux similaires, chaque partie de la surface à irradier est irradiée par un nombre de trains d'impulsions inférieur à 30 impulsions.

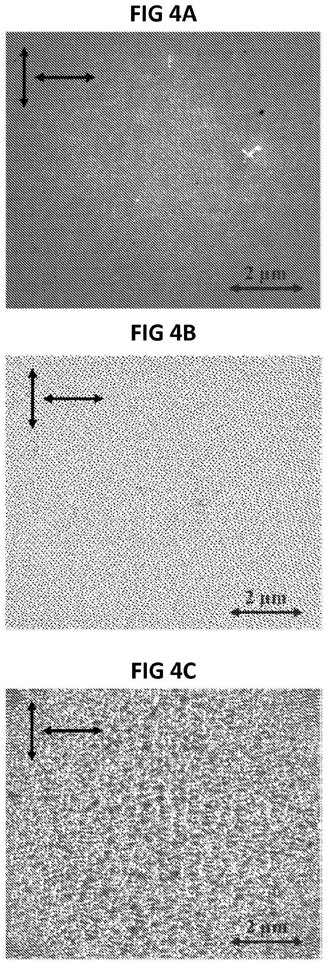

Les figures 4A à 4C montrent l'influence de la fluence crête des impulsions sur la structuration d'une surface irradiée par laser. Les autres paramètres sont ceux mentionnés plus haut. La figure 4A montre la surface après une irradiation avec des trains d'impulsions dont la somme des fluences crêtes des impulsions est de 0,19 J/cm$^2$. La structure de la surface a bien été altérée, et des nanostructures apparaissent sur la surface. Toutefois, ces nanostructures ne forment pas un motif régulier de nanopuits formant un réseau régulier. La figure 4B montre la surface après une irradiation avec des trains d'impulsions dont la somme des fluences crêtes des impulsions est de 0,24 J/cm$^2$. On constate que des nanostructures forment un motif régulier composé de nanopuits répartis régulièrement en réseau à la surface (un maillage de nanopuits), avec une périodicité inférieure à 100 nm. La figure 4C montre la surface après une irradiation avec des trains d'impulsions dont la somme des fluences crêtes des impulsions est de 0,3 J/cm$^2$. On constate que la surface est fortement altérée, avec une structuration chaotique, sans périodicité distinguable. La somme des fluences crêtes des impulsions du train d'impulsions est trop élevée par rapport à la fluence seuil à une impulsion pour permettre la formation d'un motif régulier de nanostructures présentant une périodicité. Dans l'exemple du nickel, avec un seuil d'ablation à une impulsion à 0,4 J/cm$^2$, la somme des fluences crêtes des impulsions du train d'impulsions est de préférence comprise entre 0,19 J/cm$^2$ et 0,3 J/cm$^2$.

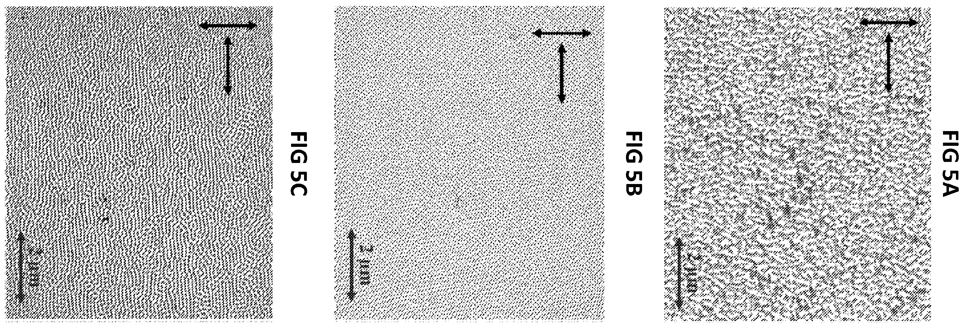

Les figures 5A à 5C montrent l'influence de la durée $\Delta T$ crête-à-crête entre deux impulsions consécutives d'un train d'impulsions sur la structuration d'une surface irradiée par laser. Les autres paramètres sont ceux mentionnés plus haut. La figure 5A montre la surface après une irradiation par un train d'impulsions comprenant deux impulsions consécutives séparées par une durée $\Delta T$ de 10 ps. On constate que la surface est fortement altérée, avec une structuration chaotique, sans périodicité distinguable. La durée $\Delta T$ est donc trop faible : les deux impulsions consécutives du train d'impulsions sont trop rapprochées. La figure 5B montre la surface après une irradiation par un train d'impulsions comprenant deux impulsions consécutives séparées par une durée $\Delta T$ de 22 ps. On constate que des nanostructures forment un motif régulier composé de nanopuits répartis régulièrement en réseau à la surface (un maillage de nanopuits), avec une périodicité inférieure à 100 nm. La figure 5C montre la surface après une irradiation par un train d'impulsions comprenant deux impulsions consécutives séparées par une durée ΔT de 38 ps. La structure de la surface a bien été altérée, et des nanostructures apparaissent sur la surface. Toutefois, ces nanostructures ne forment pas un motif régulier de nanopuits formant un réseau régulier. Cette durée ΔT est donc appropriée pour faire apparaître des nanostructures, mais trop espacée pour faire apparaître un motif régulier de nanopuits formant un réseau régulier, ou un maillage de nanopuits.

Afin de permettre l'obtention d'un motif régulier de nanostructures à la surface, la durée ΔT crête-à-crête séparant deux impulsions consécutives d'un train d'impulsions est donc de préférence comprise dans une plage appropriée, qui dépend notamment du matériau et la configuration de l'irradiation. Pour le nickel, avec une longueur d'onde de 800 nm, la durée ΔT crête-à-crête séparant deux impulsions consécutives d'un train d'impulsions est supérieure à 10 ps. Par ailleurs, pour obtenir un motif régulier de nanopuits formant un réseau régulier, la durée ΔT crête-à-crête séparant deux impulsions consécutives d'un train d'impulsions est de préférence inférieure à 38 ps. Ainsi, deux impulsions 21, 22 consécutives d'un train d'impulsions 20 sont temporellement séparées par une durée ΔT crête-à-crête comprise de préférence entre 10 et 38 ps.

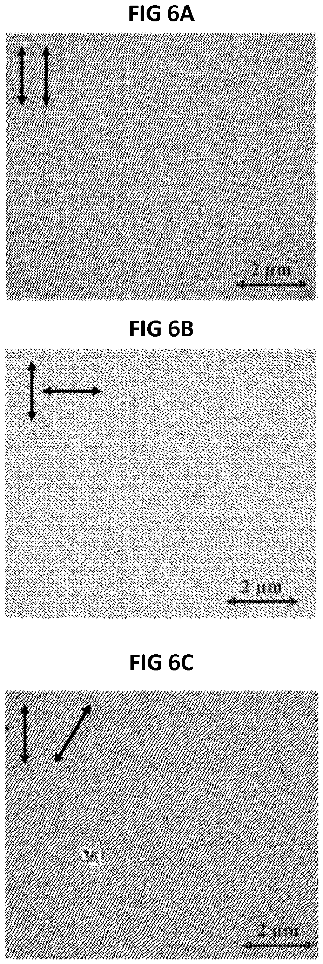

Les figures 6A à 6C montrent l'évolution de la structuration d'une surface irradiée par laser en fonction de l'orientation de la polarisation à la surface de chacune des impulsions d'un train d'impulsions. La figure 6A montre la surface après une irradiation au cours de laquelle les impulsions d'un train d'impulsions présentent des polarisations linéaires parallèles. La structure de la surface a bien été altérée, et un motif régulier de nanostructures présentant une périodicité spatiale inférieure à 100 nm apparait sur la surface. Toutefois, ces nanostructures ne forment pas un motif régulier de nanopuits formant un réseau régulier. La figure 6B montre la surface après une irradiation au cours de laquelle les impulsions d'un train d'impulsions présentent des polarisations linéaires orthogonales, ou croisées, l'orientation de la polarisation d'une impulsion étant orthogonale à l'orientation de la polarisation de l'autre impulsion du même train d'impulsions. On constate que des nanostructures forment un motif régulier composé de nanopuits répartis régulièrement en réseau à la surface, avec une périodicité inférieure à 100 nm.

La figure 6C montre la surface après une irradiation au cours de laquelle les impulsions d'un train d'impulsions présentent des polarisations linéaires non parallèles et non orthogonales. On constate que la surface est structurée de manière similaire à l'exemple illustré par la figure 6A, avec un motif régulier de nanostructures présentant une périodicité spatiale inférieure à 100 nm sans toutefois que ces nanostructures ne forment un motif régulier de nanopuits formant un réseau régulier.

Néanmoins, ces nanostructures présentent dans leur organisation une orientation différente de celles de la figure 6A : cette orientation des nanostructures est fonction de l'angle entre les orientations des polarisations des impulsions. Par conséquent, des impulsions d'un train d'impulsions présentent de préférence des polarisations linéaires (rectilignes) différentes (avec des orientations différentes) lorsque lesdites impulsions arrivent sur la surface. Cette caractéristique permet de contrôler l'orientation des nanostructures.

Seules les polarisations linéaires croisées d'impulsions d'un train d'impulsions permettent d'obtenir un motif régulier de nanopuits formant un réseau régulier. Par conséquent, des impulsions d'un train d'impulsions présentent de préférence des polarisations linéaires croisées.

Les nanopuits obtenus se présentent sous la forme de cavités débouchant sur la surface avec un diamètre compris entre 10 nm et 40 nm, et de préférence entre 20 nm et 30 nm. Lorsque le matériau présente une épaisseur sous sa surface inférieure à 200 nm, voire inférieure à 100 nm, il est possible que les nanopuits prennent la forme de cavités traversant le matériau. On parle alors de nanotrous. On peut alors obtenir une couche mince de matériau muni d'un maillage de nanotrous.

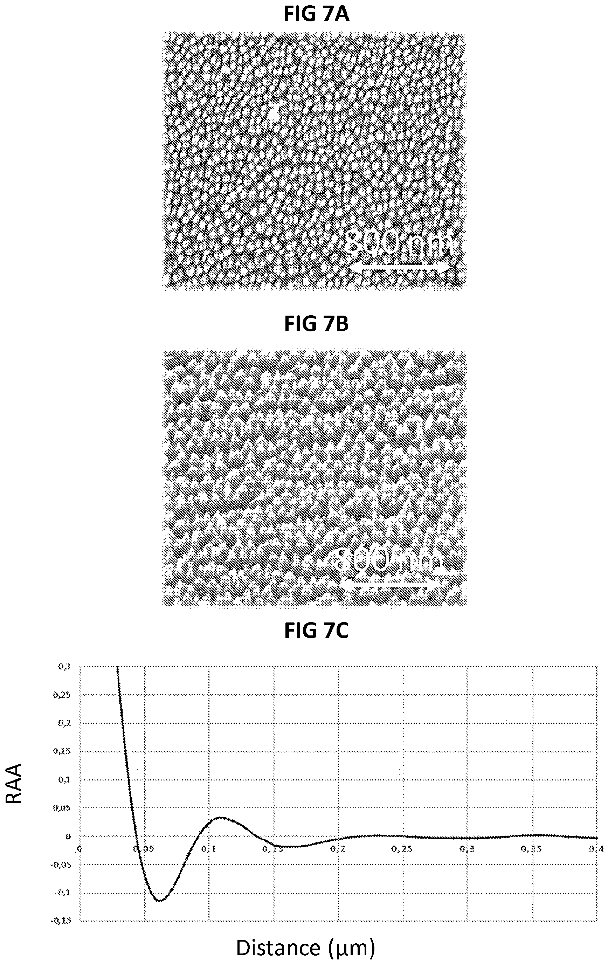

Les figures 7A et 7B sont des images acquises par microscope électronique à balayage montrant le motif régulier de nanostructures obtenu sur la surface plane d'un échantillon de carbone sous forme de diamant amorphe, plus connu sous le nom anglais de "Diamond-Like Carbon". Les paramètres suivants ont été utilisés :

- matériau de la surface : nickel (100),
- longueur d'onde : 800 nm,
- train d'impulsions composé de deux impulsions consécutives (doublet d'impulsions),
- durée ΔT entre deux impulsions consécutives d'un train d'impulsions : 60 ps,
- taux de répétition (entre deux trains) : 1 kHz,
- somme des fluences crête des impulsions d'un train d'impulsions : 0,3 J/cm$^2$ (0,15 J/cm$^2$ par impulsion),
- durée de chaque impulsion : 50 fs,
- nombre de trains d'impulsions : 25,
- polarisations linéaires croisées entre les deux impulsions consécutives.

La figure 7A montre la surface de l'échantillon non inclinée dans le microscope électronique à balayage, tandis que la figure 7B montre la surface de l'échantillon inclinée à 40° dans le microscope électronique à balayage, afin de mieux montrer les nano-bosses obtenues. On constate bien l'apparition de nano-bosses régulières sur la surface, et donc la nano-structuration de la surface. On constate que des nanostructures forment un motif régulier composé de nano-bosses réparties régulièrement en réseau à la surface, avec une périodicité inférieure à 130 nm.

La figure 7C est une courbe montrant l'autocorrélation moyenne radiale ou RAA pour l'anglais « Radial Averaged Autocorrelation »en fonction de la distance, déterminée sur une image obtenue par microscope à force atomique, indiqué ici en fonction d'une distance en $\mu$m. Cette courbe permet de finement caractériser le motif obtenu. Le premier zéro, à 46 nm, indique la dimension moyenne des nano-bosses (dans le plan de la surface), tandis que le premier pic à 110 nm indique la périodicité spatiale des nano-bosses (dans le plan de la surface).

Par rapport aux exemples précédents où le nickel était utilisé et des nano-trous obtenus, les seuls paramètres qui ont été légèrement changés sont la durée $\Delta T$ entre deux impulsions consécutives d'un train d'impulsions (60 ps au lieu de 22 ps) et la somme des fluences crête des impulsions d'un train d'impulsions (0,3 J/cm$^2$ au lieu de 0,24 J/cm$^2$). On voit donc que le procédé peut être utilisé pour obtenir un motif régulier de nanostructures sur des matériaux très différents, malgré des paramètres très similaires. Les enseignements d'un mode de réalisation sont donc facilement transposables d'un matériau à l'autre.

De même, il est possible d'obtenir des nano-bosses en utilisant le nickel, en utilisant les mêmes paramètres que dans les exemples précédents où des nano-trous étaient obtenus, à l'exception de la durée $\Delta T$ crête-à-crête entre deux impulsions consécutives d'un train d'impulsions 20 qui est réduite (par exemple à 8 ps au lieu de 22 ps) et de la somme des fluences crête des impulsions d'un train d'impulsions, qui est réduite également (par exemple à 0,2 J/cm$^2$ au lieu de 0,24 J/cm$^2$). Il est donc possible d'obtenir soit des nano-bosses, soit des nano-trous, en modifiant légèrement les paramètres du procédé.

L'invention n'est pas limitée au mode de réalisation décrit et représenté aux figures annexées. Des modifications restent possibles sans sortir pour autant du domaine de protection de l'invention tel que défini dans les revendications suivantes.

## Revendications

1. Procédé de nanostructuration de la surface d'un matériau solide pour former un motif régulier de nanostructures sur ladite surface, ledit procédé comprenant l'étape suivante:

   - fourniture du matériau solide, ledit matériau comportant une surface ;
   et **caractérisé en ce que** le procédé comprend les étapes suivantes :
   - irradiation d'une partie de la surface par un faisceau laser femtoseconde, comprenant une pluralité de trains d'impulsions (20), dans lequel :

     • chaque train d'impulsions (20) comprend au moins deux impulsions (21, 22),

     • chaque impulsion (21, 22) présente une fluence crête, et une somme des fluences crêtes des impulsions d'un train d'impulsions est comprise entre 10% et 70 % d'une fluence seuil correspondant à un seuil d'ablation de matière pour une impulsion pour ledit matériau,

     • deux impulsions consécutives d'un train d'impulsions sont temporellement séparées par une durée $\Delta T$ crête-à-crête comprise entre 500 fs et 150 ps,

     • deux trains d'impulsions consécutifs sont temporellement séparés par une durée (D) supérieure à 10 $\Delta T$,

   - obtention d'un motif régulier de nanostructures sur ladite partie de surface, présentant une périodicité spatiale inférieure à 130 nm,
   - déplacement du faisceau laser femtoseconde sur la surface de sorte à irradier d'autres parties de ladite surface.

2. Procédé selon la revendication 1, dans lequel chaque impulsion (21, 22) présente une fluence crête comprise entre 5% et 65% d'une fluence seuil correspondant à un seuil d'ablation de matière pour une impulsion pour ledit matériau.

3. Procédé selon la revendication 1, dans lequel l'irradiation par la pluralité de trains d'impulsions (20) sur un même élément de surface représente une dose totale inférieure à 6 J/cm$^2$.

4. Procédé selon l'une des revendications 1 à 3, dans lequel chaque partie de la surface est irradiée par au moins 5 trains d'impulsions.

5. Procédé selon l'une des revendications précédentes, dans lequel chaque partie de la surface est irradiée par un nombre de trains d'impulsions inférieur à 500.

6. Procédé selon l'une des revendications précédentes, dans lequel chaque impulsion (21, 22) d'un train d'impulsions (20) présente une durée inférieure à la durée $\Delta T$ entre deux impulsions consécutives du train d'impulsions.

7. Procédé selon l'une des revendications précédentes, dans lequel le matériau présente une structure cristalline, et notamment une structure cubique face centrée.

8. Procédé selon l'une des revendications 1 à 6, dans lequel le matériau contient du carbone sous forme de diamant amorphe.

9. Procédé selon l'une des revendications précédentes, dans lequel des impulsions (21, 22) d'un train d'impulsions (20) présentent des polarisations linéaires différentes lorsque lesdites impulsions arrivent sur la surface.

10. Procédé selon la revendication précédente, dans lequel des impulsions (21, 22) d'un train d'impulsions (20) présentent des polarisations linéaires croisées.

11. Procédé selon l'une des revendications précédentes, dans lequel les nanostructures obtenues sont des nanopuits ou des nanotrous et/ou des nano-bosses, formant un réseau régulier sur la surface.

12. Procédé selon la revendication précédente, dans lequel les nanopuits présentent un diamètre compris entre 10 nm et 40 nm, et de préférence entre 20 nm et 30 nm.

13. Procédé selon l'une des revendications précédentes, dans lequel les parties irradiées de la surface se recouvrent partiellement.

14. Procédé selon l'une des revendications précédentes, dans lequel le matériau présente une épaisseur inférieure à 200 nm.

**Patentansprüche**

1. Verfahren zur Nanostrukturierung der Oberfläche eines festen Materials zum Bilden eines gleichmäßigen Motivs von Nanostrukturen auf der Oberfläche, wobei das Verfahren den folgenden Schritt umfasst:

   - Bereitstellen des festen Materials, wobei das Material eine Oberfläche umfasst;

   und **dadurch gekennzeichnet, dass** das Verfahren die folgenden Schritte umfasst:

   - Bestrahlen eines Teils der Oberfläche mit einem Femtosekundenlaser-Strahlenbündel, das eine Vielzahl von Impulsfolgen (20) umfasst, wobei:

   • jede Impulsfolge (20) mindestens zwei Impulse (21, 22) umfasst,
   • jeder Impuls (21, 22) eine Spitzenfluenz aufweist und eine Summe der Spitzenfluenzen der Impulse einer Impulsfolge zwischen 10% und 70% einer Schwellenfluenz beträgt, die einer Materialablationsschwelle für einen Impuls für das Material entspricht,
   • zwei aufeinanderfolgende Impulse einer Impulsfolge zeitlich durch eine Dauer $\Delta T$ von Spitze zu Spitze von zwischen 500 fs und 150 ps getrennt sind,

   • zwei aufeinanderfolgende Impulsfolgen zeitlich durch eine Dauer (D) getrennt sind, die größer als 10 $\Delta T$ ist,

   - Erhalten eines gleichmäßigen Motivs von Nanostrukturen auf dem Oberflächenteil, die eine räumliche Periodizität von kleiner als 130 nm aufweisen,
   - Verlagerung des Femtosekundenlaser-Strahlenbündels auf der Oberfläche, derart dass andere Teile der Oberfläche bestrahlt werden.

2. Verfahren nach Anspruch 1, wobei jeder Impuls (21, 22) eine Spitzenfluenz von zwischen 5% und 65% einer Schwellenfluenz aufweist, die einer Materialablationsschwelle für einen Impuls für das Material entspricht.

3. Verfahren nach Anspruch 1, wobei die Bestrahlung durch die Vielzahl von Impulsfolgen (20) auf einem selben Oberflächenelement eine Gesamtdosis von kleiner als 6 J/cm$^2$ darstellt.

4. Verfahren nach einem der Ansprüche 1 bis 3, wobei jeder Teil der Oberfläche durch mindestens 5 Impulsfolgen bestrahlt wird.

5. Verfahren nach einem der vorhergehenden Ansprüche, wobei jeder Teil der Oberfläche durch eine Anzahl von Impulsfolgen von kleiner als 500 bestrahlt wird.

6. Verfahren nach einem der vorhergehenden Ansprüche, wobei jeder Impuls (21, 22) einer Impulsfolge (20) eine Dauer aufweist, die kleiner als die Dauer $\Delta T$ zwischen zwei aufeinanderfolgenden Impulsen der Impulsfolge ist.

7. Verfahren nach einem der vorhergehenden Ansprüche, wobei das Material eine kristalline Struktur und insbesondere eine kubisch flächenzentrierte Struktur aufweist.

8. Verfahren nach einem der Ansprüche 1 bis 6, wobei das Material Kohlenstoff in der Form von amorphem Diamant enthält.

9. Verfahren nach einem der vorhergehenden Ansprüche, wobei die Impulse (21, 22) einer Impulsfolge (20) unterschiedliche lineare Polarisationen aufweisen, wenn die Impulse auf der Oberfläche eintreffen.

10. Verfahren nach dem vorhergehenden Anspruch, wobei die Impulse (21, 22) einer Impulsfolge (20) gekreuzte lineare Polarisationen aufweisen.

11. Verfahren nach einem der vorhergehenden Ansprüche, wobei die erhaltenen Nanostrukturen Nanosenken oder Nanolöcher und/oder Nanohöcker sind, die ein gleichmäßiges Netz auf der Oberfläche bilden.

12. Verfahren nach dem vorhergehenden Anspruch, wobei die Nanosenken einen Durchmesser von zwischen 10 nm und 40 nm und vorzugsweise von zwischen 20 nm und 30 nm aufweisen.

13. Verfahren nach einem der vorhergehenden Ansprüche, wobei die bestrahlten Teile der Oberfläche sich teilweise bedecken.

14. Verfahren nach einem der vorhergehenden Ansprüche, wobei das Material eine Dicke von kleiner als 200 nm aufweist.

**Claims**

1. A method of nanostructuring the surface of a solid material to form a regular pattern of nanostructures on said surface, said method comprising the following step:

    - providing the solid material, said material having a surface;

    and **characterised in that** the method comprises the following steps:

    - irradiation of a portion of the surface by a femtosecond laser beam, comprising a plurality of pulse trains (20), wherein:

        • each pulse train (20) comprises at least two pulses (21, 22),
        • each pulse (21, 22) has a peak fluence, and a sum of the peak fluences of the pulses in a pulse train is between 10% and 70% of a threshold fluence corresponding to a material ablation threshold for one pulse for said material,
        • two consecutive pulses of a pulse train are temporally separated by a peak-to-peak duration $\Delta T$ between 500 fs and 150 ps,
        • two consecutive pulse trains are temporally separated by a duration (D) greater than 10 $\Delta T$,

    - obtaining a regular pattern of nanostructures on said surface portion, having a spatial periodicity of less than 130 nm,
    - moving the femtosecond laser beam over the surface so as to irradiate other parts of said surface.

2. The method of claim 1, wherein each pulse (21, 22) has a peak fluence between 5% and 65% of a threshold fluence corresponding to a material ablation threshold for a pulse for said material.

3. The method of claim 1, wherein the irradiation by the plurality of pulse trains (20) on a single surface element represents a total dose of less than 6 J/cm$^2$.

4. The method of any of claims 1 to 3, wherein each portion of the surface is irradiated with at least 5 pulse trains.

5. The method according to any of the preceding claims, wherein each portion of the surface is irradiated with a number of pulse trains less than 500.

6. The method according to any of the preceding claims, wherein each pulse (21, 22) of a pulse train (20) has a duration less than the duration $\Delta T$ between two consecutive pulses of the pulse train.

7. The method of any of the preceding claims, wherein the material has a crystalline structure, and in particular a face-centered cubic structure.

8. The method of any of claims 1 to 6, wherein the material contains carbon in the form of amorphous diamond.

9. The method according to any of the preceding claims, wherein pulses (21, 22) of a pulse train (20) have different linear polarizations when said pulses arrive on the surface.

10. The method of the preceding claim, wherein pulses (21, 22) of a pulse train (20) have crossed linear polarizations.

11. The method according to any of the preceding claims, wherein the obtained nanostructures are nanowells or nanotrunks and/or nano-bumps, forming a regular network on the surface.

12. The method of the preceding claim, wherein the nanowells have a diameter between 10 nm and 40 nm, and preferably between 20 nm and 30 nm.

13. The method of any of the preceding claims, wherein the irradiated portions of the surface partially overlap.

14. The method of any of the preceding claims, wherein the material has a thickness of less than 200 nm.

FIG 1

**FIG 2A**

20

21

22

ΔT

**FIG 2B**

20a

20b

D

## FIG 3A

1 impulsion     2 μm

## FIG 3B

25 impulsions     2 μm

## FIG 3C

30 impulsions     2 μm

## FIG 4A

## FIG 4B

## FIG 4C

## FIG 5A

## FIG 5B

## FIG 5C

## FIG 6A

## FIG 6B

## FIG 6C

## FIG 7A

## FIG 7B

## FIG 7C

## RÉFÉRENCES CITÉES DANS LA DESCRIPTION

**Documents brevets cités dans la description**

- US 20120322236 A1
- WO 2007012215 A1
- DE 102005043495 A1

**Littérature non-brevet citée dans la description**

- **J.M. LIU.** Simple technique for measurements of pulsed Gaussian-beam spot sizes. *OPTICS LETTERS,* Mai 1982, (5), 196-198
- **HASHIDA et al.** Ablation thresholds of metals with femtosecond laser pulses. *proc. SPIE,* 2001, vol. 4423, 179-185
- **OKAMURO et al.** Laser fluence dependence of periodic grating structures formed on metal surfaces under femtosecond laser pulse irradiation. *Physical Review B,* 2010, vol. 82, 165417